(19) Europäisches Patentamt
European Patent Office
Office européen des brevets

(11) **EP 4 459 904 A1**

(12) **EUROPEAN PATENT APPLICATION**
published in accordance with Art. 153(4) EPC

(43) Date of publication:
**06.11.2024 Bulletin 2024/45**

(51) International Patent Classification (IPC):
*H04L 1/00* (2006.01)

(21) Application number: **21969491.6**

(86) International application number:
**PCT/CN2021/142694**

(22) Date of filing: **29.12.2021**

(87) International publication number:
**WO 2023/123123 (06.07.2023 Gazette 2023/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventor: **LI, Mingju**
**Beijing 100085 (CN)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(54) **FREQUENCY-DOMAIN RESOURCE DETERMINATION METHOD AND APPARATUS, AND STORAGE MEDIUM**

(57) The present invention relates to a frequency-domain resource determination method and apparatus, and a storage medium. The frequency-domain resource determination method is applied to a terminal, and includes: monitoring at least two PDCCH candidate resources, wherein the at least two PDCCH candidate resources correspond, on a one-to-one basis, to at least two search space sets that have a linkage relationship, and the at least two PDCCH candidate resources are used for carrying DCI, which includes frequency-domain resource allocation information; and the frequency-domain resource allocation information is used for indicating the position of a frequency-domain resource in a designated bandwidth, and the designated bandwidth includes a resource block that is occupied by at least one control resource set; and on the basis of the frequency-quency-domain resource allocation information, determining a frequency-domain resource for transmitting a PDSCH. By means of the present invention, a frequency-domain resource for transmitting a PDSCH can be determined, thereby improving the transmission performance.

monitoring at least two PDCCH candidate resources, where the at least two PDCCH candidate resources correspond to at least two search space sets having a link relationship, and the at least two PDCCH candidate resources carry downlink control information (DCI), the DCI includes frequency domain resource assignment information, the frequency domain resource assignment information indicates a position of the frequency domain resource within a designated bandwidth, and the designated bandwidth includes a resource block occupied by at least one control resource set — S11

determining a frequency domain resource for a PDSCH transmission according to the frequency domain resource assignment information — S12

FIG. 2

## Description

### FIELD

The present invention relates to the field of communication technology, and particularly to a method for determining a frequency domain resource, an apparatus for determining a frequency domain resource, and a storage medium.

### BACKGROUND

In the new radio (NR) technology, in a communication band such as frequency range 2 (FR2), a high frequency channel is attenuated quickly, beam-based transmission and reception is required to ensure the signal coverage. In a case where a network device (e.g. a base station) has multiple transmission reception points (TRPs), the multiple TRPs may be used to provide a service for a terminal, for example the multiple TRPs are used to perform a physical downlink control channel (PDCCH) transmission to the terminal.

In the related art, in a case where the multiple TRPs are used for the PDCCH transmission, two control resource sets (CORESETs) may be configured, and transmission configuration indicator (TCI) states corresponding to the two CORESETs are configured, where each CORESET corresponds to one TCI state configured. A search space set (SS set) is configured to be associated with the two CORESETs, respectively. That is, two SS sets with a link relationship are configured to be associated with different CORESETs and correspond to different TCI states. The two SS sets with the link relationship may be understood as that two PDCCH candidates which have the same PDCCH candidate index in the two SS sets are used for sending one piece of downlink control information (DCI).

In the case where the multiple TRPs are used for the PDCCH transmission, a frequency domain resource for a physical downlink shared channel (PDSCH) needs to be indicated, and indication information of the frequency domain resource indicates a position of the frequency domain resource within a designated bandwidth, hereinafter $N_{\mathrm{RB}}^{\mathrm{DL,BWP}}$ represents the designated bandwidth. In the related art, in a case where a DCI format carried by the PDCCH is DCI format 1_0, a bandwidth corresponding to a frequency domain resource of a scheduled PDSCH is a bandwidth of CORESET # 0. The multi-TRP PDCCH repetition is currently supported. In the multi-TRP PDCCH repetition, in a case where frequency domain resources of the two CORESETs associated with the SS sets corresponding to the two PDCCH candidates are different, a problem to be solved is that which CORESET $N_{\mathrm{RB}}^{\mathrm{DL,BWP}}$ is based on, i.e., how to determine $N_{\mathrm{RB}}^{\mathrm{DL,BWP}}$.

## SUMMARY

In order to solve the problems in the related art, the present invention provides a method for determining a frequency domain resource, an apparatus for determining the frequency domain resource, and a storage medium.

According to a first aspect of embodiments of the present invention, there is provided the method for determining the frequency domain resource, applied to a terminal, including: monitoring at least two physical downlink control channel (PDCCH) candidate resources, where the at least two PDCCH candidate resources correspond to at least two search space sets having a link relationship, and the at least two PDCCH candidate resources carry downlink control information (DCI), the DCI includes frequency domain resource assignment information, the frequency domain resource assignment information indicates a position of the frequency domain resource within a designated bandwidth, and the designated bandwidth includes a resource block occupied by at least one control resource set; and determining a frequency domain resource for a physical downlink shared channel (PDSCH) transmission according to the frequency domain resource assignment information.

In an embodiment, the at least one control resource set is determined according to at least two control resource sets respectively associated with the at least two search space sets.

In an embodiment, the at least one control resource set is a designated control resource set among the at least two control resource sets.

In an embodiment, the designated control resource set is one of: a control resource set with a smallest control resource set identifier among the at least two control resource sets; a control resource set corresponding to a designated search space set, where the designated search space set is a search space set with a smallest search space set identifier among the at least two search space sets; a control resource set corresponding to a physical resource block occupying a lowest frequency domain position among designated physical resource blocks, where one designated physical resource block is a physical resource block with a lowest number among physical resource blocks included in one of the at least two control resource sets; or the at least two control resource sets.

In an embodiment, in response to the designated control resource set being the at least two control resource sets, the designated bandwidth includes: a consecutive physical resource block starting from a first physical resource block and ending with a second physical resource block, where the first physical resource block is a physical resource block occupying a lowest frequency domain position among physical resource blocks included in the at least two control resource sets, and the second physical resource block is a physical resource block occupying a highest frequency domain position among the physical resource blocks included in the at least two control resource sets.

In an embodiment, the at least one control resource set is control resource set 0.

In an embodiment, a format of the DCI is DCI 1_0.

According to a second aspect of embodiments of the present invention, there is provided the method for determining the frequency domain resource, applied to a network device, including: configuring at least two PDCCH candidate resources, where the at least two PDCCH candidate resources correspond to at least two search space sets having a link relationship, and the at least two PDCCH candidate resources carry DCI, the DCI includes frequency domain resource assignment information, the frequency domain resource assignment information indicates a position of the frequency domain resource within a designated bandwidth, and the designated bandwidth includes a resource block occupied by at least one control resource set.

In an embodiment, the at least one control resource set is determined according to at least two control resource sets respectively associated with the at least two search space sets.

In an embodiment, the at least one control resource set is a designated control resource set among the at least two control resource sets.

In an embodiment, the designated control resource set is one of: a control resource set with a smallest control resource set identifier among the at least two control resource sets; a control resource set corresponding to a designated search space set, where the designated search space set is a search space set with a smallest search space set identifier among the at least two search space sets; a control resource set corresponding to a physical resource block occupying a lowest frequency domain position among designated physical resource blocks, where one designated physical resource block is a physical resource block with a lowest number among physical resource blocks included in one of the at least two control resource sets; or the at least two control resource sets.

In an embodiment, in response to the designated control resource set being the at least two control resource sets, the designated bandwidth includes: a consecutive physical resource block starting from a first physical resource block and ending with a second physical resource block, where the first physical resource block is a physical resource block occupying a lowest frequency domain position among physical resource blocks included in the at least two control resource sets, and the second physical resource block is a physical resource block occupying a highest frequency domain position among the physical resource blocks included in the at least two control resource sets.

In an embodiment, the at least one control resource set is control resource set 0.

In an embodiment, a format of the DCI is DCI 1_0.

According to a third aspect of embodiments of the present invention, there is provided an apparatus for determining a frequency domain resource, including: a monitoring unit configured to monitor at least two physical downlink control channel (PDCCH) candidate resources, where the at least two PDCCH candidate resources correspond to at least two search space sets having a link relationship, and the at least two PDCCH candidate resources carry downlink control information (DCI), the DCI includes frequency domain resource assignment information, the frequency domain resource assignment information indicates a position of the frequency domain resource within a designated bandwidth, and the designated bandwidth includes a resource block occupied by at least one control resource set; and a processing unit configured to determine a frequency domain resource for a physical downlink shared channel (PDSCH) transmission according to the frequency domain resource assignment information.

In an embodiment, the at least one control resource set is determined according to at least two control resource sets respectively associated with the at least two search space sets.

In an embodiment, the at least one control resource set is a designated control resource set among the at least two control resource sets.

In an embodiment, the designated control resource set is one of: a control resource set with a smallest control resource set identifier among the at least two control resource sets; a control resource set corresponding to a designated search space set, where the designated search space set is a search space set with a smallest search space set identifier among the at least two search space sets; a control resource set corresponding to a physical resource block occupying a lowest frequency domain position among designated physical resource blocks, where one designated physical resource block is a physical resource block with a lowest number among physical resource blocks included in one of the at least two control resource sets; or the at least two control resource sets.

In an embodiment, in response to the designated control resource set being the at least two control resource sets, the designated bandwidth includes: a consecutive physical resource block starting from a first physical resource block and ending with a second physical resource block, where the first physical resource block is a physical resource block occupying a lowest frequency domain position among physical resource blocks included in the at least two control resource sets, and the second physical resource block is a physical resource block occupying a highest frequency domain position among the physical resource blocks included in the at least two control resource sets.

In an embodiment, the at least one control resource set is control resource set 0.

In an embodiment, a format of the DCI is DCI 1_0.

According to a fourth aspect of embodiments of the present invention, there is provided an apparatus for determining a frequency domain resource, including: a configuring unit configured to configure at least two physical downlink control channel (PDCCH) candidate resources, where the at least two PDCCH candidate resources correspond to at least two search space sets having a link relationship, and the at least two PDCCH candidate resources carry downlink control information (DCI), the DCI includes frequency domain resource assignment information, the frequency domain resource assignment information indicates a position of the frequency domain resource within a designated bandwidth, and the designated bandwidth includes a resource block occupied by at least one control resource set.

In an embodiment, the at least one control resource set is determined according to at least two control resource sets respectively associated with the at least two search space sets.

In an embodiment, the at least one control resource set is a designated control resource set among the at least two control resource sets.

In an embodiment, the designated control resource set is one of: a control resource set with a smallest control resource set identifier among the at least two control resource sets; a control resource set corresponding to a designated search space set, where the designated search space set is a search space set with a smallest search space set identifier among the at least two search space sets; a control resource set corresponding to a physical resource block occupying a lowest frequency domain position among designated physical resource blocks, where one designated physical resource block is a physical resource block with a lowest number among physical resource blocks included in one of the at least two control resource sets; or the at least two control resource sets.

In an embodiment, in response to the designated control resource set being the at least two control resource sets, the designated bandwidth includes: a consecutive physical resource block starting from a first physical resource block and ending with a second physical resource block, where the first physical resource block is a physical resource block occupying a lowest frequency domain position among physical resource blocks included in the at least two control resource sets, and the second physical resource block is a physical resource block occupying a highest frequency domain position among the physical resource blocks included in the at least two control resource sets.

In an embodiment, the at least one control resource set is control resource set 0.

In an embodiment, a format of the DCI is DCI 1_0.

According to a fifth aspect of embodiments of the present invention, there is provided a device for determining a frequency domain resource, including: a processor; and a memory for storing instructions executable by the processor. The processor is configured to perform the method according to the first aspect or any one of the embodiments of the first aspect.

According to a sixth aspect of embodiments of the present invention, there is provided a device for determining a frequency domain resource, including: a processor; and a memory for storing instructions executable by the processor. The processor is configured to perform the method according to the second aspect or any one of the embodiments of the second aspect.

According to a seventh aspect of embodiments of the present invention, there is provided a storage medium having instructions that, when executed by a processor of a terminal, enable the terminal to perform the method according to the first aspect or any one of the embodiments of the first aspect.

According to an eighth aspect of embodiments of the present invention, there is provided a storage medium having instructions that, when executed by a processor of a network device, enable the network device to perform the method according to the second aspect or any one of the embodiments of the second aspect.

The technical solutions provided by the embodiments of the present invention may include the following advantageous effects. The DCI carried by the at least two PDCCH candidate resources monitored by the terminal includes the frequency domain resource assignment information, the frequency domain resource assignment information indicates the position of the frequency domain resource within the designated bandwidth, and the designated bandwidth includes the resource block occupied by the at least one control resource set, so that the terminal may determine the frequency domain resource for the PDSCH transmission according to the frequency domain resource assignment information. Therefore, with the present method, the determination of the frequency domain resource for the PDSCH is made more universal, and the frequency domain resource used for the PDSCH transmission may be determined even in a case where the frequency domain resources of the CORESETs corresponding to the two PDCCH candidates used for the PDCCH repetition are different, thus improving the transmission performance.

It is to be understood that both the foregoing general description and the following detailed description are exemplary and explanatory only, and shall not be construed to limit the present invention.

**BRIEF DESCRIPTION OF THE DRAWINGS**

The accompanying drawings, which are incorporated in and constitute a part of this specification, illustrate embodiments in line with the present invention and, together with the description, serve to explain the principle of the present invention.

FIG. 1 is a schematic diagram illustrating a wireless communication system according to an illustrative embodiment.

FIG. 2 is a flow chart of a method for determining a frequency domain resource according to an illustrative embodiment.

FIG. 3 shows a schematic diagram of a physical resource block (PRB) occupied by a frequency domain resource in an illustrative embodiment of the present invention.

FIG. 4 shows a schematic diagram of a PRB occupied by a frequency domain resource in an illustrative embodiment of the present invention.

FIG. 5 is a flow chart of a method for determining a frequency domain resource according to an illustrative embodiment.

FIG. 6 is a block diagram illustrating an apparatus for determining a frequency domain resource according to an illustrative embodiment.

FIG. 7 is a block diagram illustrating an apparatus for determining a frequency domain resource according to an illustrative embodiment.

FIG. 8 is a block diagram illustrating a device for determining a frequency domain resource according to an illustrative embodiment.

FIG. 9 is a block diagram illustrating a device for determining a frequency domain resource according to an illustrative embodiment.

## DETAILED DESCRIPTION

Embodiments will be described in detail herein, examples of which are illustrated in the accompanying drawings. The following description refers to the accompanying drawings in which the same reference numerals in different drawings represent the same or similar elements unless otherwise represented. The implementations set forth in the following description of the embodiments do not represent all possible implementations in line with the present invention.

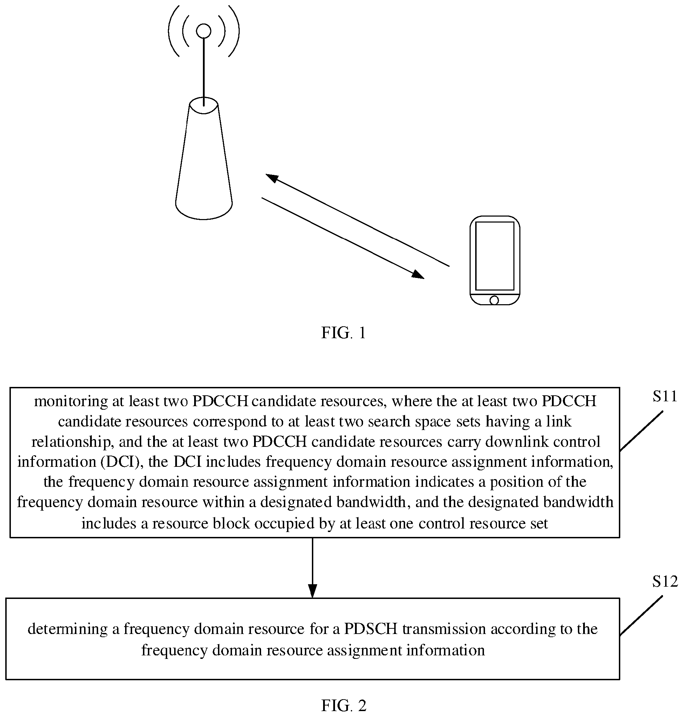

A method for determining a frequency domain resource provided by embodiments of the present invention may be applied to a wireless communication system shown in FIG. 1. Referring to FIG. 1, the wireless communication system includes a terminal and a network device. The terminal is communicated with the network device via a radio resource, and sends and receives data.

It may be understood that the wireless communication system shown in FIG. 1 is only for schematic illustration. The wireless communication system may also include other network devices, such as core network devices, wireless relay devices, and wireless backhaul devices, which are not shown in FIG 1. The number of network devices and the number of terminals included in the wireless communication system are not limited in embodiments of the present invention.

It may be further understood that the wireless communication system in embodiments of the present invention is a network that provides a wireless communication function. The wireless communication system may adopt different communication technologies, such as code division multiple access (CDMA), wideband code division multiple access (WCDMA), time division multiple access (TDMA), frequency division multiple access (FDMA), orthogonal frequency-division multiple access (OFDMA), single carrier frequency division multiple access (SC-FDMA), and carrier sense multiple access with collision avoidance. The networks may be classified, according to capacity, rate, delay and other factors of different networks, into a 2nd generation (2G) network, a 3G network, a 4G network, or a future evolution network, such as a 5G network, which may also be referred to as a new radio (NR) network. For ease of description, a wireless communication network will be sometimes abbreviated as a network in the present invention.

Further, the network device involved in the present invention may also be referred to as a radio access network device. The radio access network device may be a base station, an evolved node B, a home base station, an access point (AP) in a wireless fidelity (WI-FI) system, a wireless relay node, a wireless backhaul node, a transmission point (TP), a transmission and reception point (TRP), or the like, or may be a gNB in a NR system, or may be a component or a part of a device that constitutes a base station. The network device may be a vehicle-mounted device when it is used in a vehicle to everything (V2X) communication system. It is to be understood that the specific technology and specific device form adopted by the network device are not limited in the embodiments of the present invention.

Further, the terminal involved in the present invention, which may also be referred to as a terminal device, a user equipment (UE), a mobile station (MS), a mobile terminal (MT), etc., is a device that provides voice and/or data connectivity to a user. For example, the terminal may be a handheld device with a wireless connection function, a vehicle-mounted device, or the like. At present, for example, the terminal may be a mobile phone, a pocket personal computer (PPC), a palmtop computer, a personal digital assistant (PDA), a notebook computer, a tablet computer, a wearable device, a vehicle-mounted device, or the like. In addition, the terminal device may be a vehicle-mounted device when it is used in a vehicle to everything (V2X) communication system. It is to be understood that the specific technology and specific device form adopted by the terminal are not limited in the embodiments of the present invention.

In the present invention, data transmission is performed between the network device and the terminal according to a beam. During beam-based data transmission, the network device (e.g. a base station) may perform a PDCCH transmission to the terminal by using a plurality of TRPs (also referred to as multiple TRPs). In the related art, in a case where the network device (e.g. the base station) sends PDCCH data to the terminal by using one TRP, the terminal is configured with a TCI state to receive the PDCCH data. For example, a configuration method is as follows: a CORESET, such as a CORESET#1, is configured for the terminal, and a TCI state correspondingly used in a case where the terminal receives the PDCCH data with the CORESET#1 resource is configured as TCI#1, and the terminal is configured with a search space set (an SS set) associated with the CORESET#1. In a case where the terminal receives PDCCH data on a resource in the SS set, the terminal uses a beam corresponding to the TCI#1 for reception. At present, each SS set may only be associated with one CORESET, and each CORESET only configures one TCI state.

In the present invention, the data transmission is performed between the network device and the terminal according to the beam. During the beam-based data transmission, in a case where the network device (e.g. the base station) sends the PDCCH data to the terminal by using the plurality of TRPs (also referred to as the multiple TRPs), different TRPs are used for transmission with different beams. The multiple TRPs may send the same PDCCH data.

An existing method for the multiple TRPs to send the same PDCCH data includes: configuring two CORESETs each configured with one TCI state, and configuring an SS set associated with first and second CORESET, respectively. That is, two SS sets are configured to be associated with different CORESETs and correspond to different TCI states. There is also an association between PDCCH candidates of the two SS sets having the link relationship. For example, in a case where an SS set#1 is associated with an SS set#2 (i.e., they have the link relationship), a PDCCH candidate#i in the SS set#1 is associated with a PDCCH candidate#i in the SS set#2, that is, two PDCCH candidates with the same index are used to send the same DCI, that is, information about the DCI sent by the two PDCCH candidates is the same.

One application scenario where the multiple TRPs send the same PDCCH data is Multi-TRP PDCCH repetition. In the Multi-TRP PDCCH repetition, two CORESETs are configured and the TCI states corresponding to the two CORESETs are configured. Each CORESET is correspondingly configured with one TCI state. Two SS sets having the link relationship are configured to be associated with different CORESETs and correspond to different TCI states. The two SS sets having the link relationship may be understood as that two PDCCH candidates which have the same PDCCH candidate index in the two SS sets are used for sending the same DCI, that is, the information about the DCI sent by the two PDCCH candidates is the same.

In a case where the multiple TRPs are used for the PDCCH transmission, a frequency domain resource for a physical downlink shared channel (PDSCH) needs to be indicated, and indication information of the frequency domain resource indicates a position of the frequency domain resource within a designated bandwidth, hereinafter $N_{RB}^{DL,BWP}$ represents the designated bandwidth. In the related art, in a case where there is no PDCCH repetition and a DCI format carried by the PDCCH is DCI format 1_0, a size and a position of $N_{RB}^{DL,BWP}$ are a size and a position of CORESET#0, respectively, and a number of occupied bits is: frequency domain resource assignment $\left\lceil \log_2(N_{RB}^{DL,BWP}(N_{RB}^{DL,BWP}+1)/2) \right\rceil$.

However, in the multi-TRP PDCCH repetition, in a case where the frequency domain resources of the two CORESETs associated with the SS sets corresponding to the two PDCCH candidates are different, a question, which CORESET $N_{RB}^{DL,BWP}$ should be based on, needs to be discussed.

In view of the above, the present invention provides a method for determining a PDSCH frequency domain bandwidth $N_{RB}^{DL,BWP}$. In the method, in a case where the terminal performs PDCCH repetition, a designated bandwidth $N_{RB}^{DL,BWP}$ corresponding to the frequency domain resource indicated by the frequency domain resource assignment information in the DCI carried by the CORESETs corresponding to the two PDCCH candidates used for the PDCCH repetition is based on a bandwidth of a resource block (RB) including a designated CORESET, and the designated bandwidth $N_{RB}^{DL,BWP}$ corresponding to frequency domain resource assignment of the PDSCH is determined to be the bandwidth of the designated CORESET. Furthermore, by means of the method for determining the PDSCH frequency domain bandwidth $N_{RB}^{DL,BWP}$ provided by the present invention, the PDSCH frequency domain bandwidth $N_{RB}^{DL,BWP}$ is made more universal. Moreover, in the case where the frequency domain resources of the CORESETs corresponding to the two PDCCH candidates used for the PDCCH repetition are different, the bandwidth $N_{RB}^{DL,BWP}$ used for scheduling the PDSCH may also be clearly defined, so that the terminal and the network device have a consistent understanding of the bandwidth $N_{RB}^{DL,BWP}$ used for scheduling the PDSCH, thereby improving transmission performance.

FIG. 2 is a flow chart illustrating a method for determining a frequency domain resource according to an illustrative embodiment. As shown in FIG. 2, the method for determining the frequency domain resource is applied to the terminal, including the following steps.

In S11, the at least two PDCCH candidates are monitored, where the at least two PDCCH candidates correspond to at least two SS sets having a link relationship, and the at least two PDCCH candidates carry the DCI, the DCI includes frequency domain resource assignment information, the frequency domain resource assignment information indicates a position of the frequency domain resource within a designated bandwidth, and the designated bandwidth includes a resource block occupied by at least one control resource set.

In S12, the frequency domain resource for a PDSCH transmission is determined according to the frequency domain resource assignment information.

In the present invention, the at least two PDCCH candidates carrying the DCI may be understood as sending the DCI based on the at least two PDCCH candidates. Information included in the DCI sent by the at least two PDCCH candidates is the same, and it may also be understood that the DCI sent by the at least two PDCCH candidates is the same DCI.

In the present invention, a format of the DCI sent by the at least two PDCCH candidates may be DCI format 1_0.

In the present invention, indexes of the at least two PDCCH candidates monitored by the terminal are the same.

The at least two PDCCH candidates monitored in the present invention may be understood to be corresponding PDCCH candidates in a scenario of the Multi-TRP PDCCH repetition.

A typical value of the number of the at least two PDCCH candidates monitored by the terminal in the present invention is two.

In one example, in the Multi-TRP PDCCH repetition, the terminal monitors two PDCCH candidates, where the two PDCCH candidates correspond to the two SS sets having the link relationship, and the two PDCCH candidates have the same index and are used to send the same DCI. The DCI includes the frequency domain resource assignment information, where the frequency domain resource assignment information indicates the position of the frequency domain resource within the designated bandwidth, and the designated bandwidth includes RB(s) occupied by the at least one CORESET.

The two SS sets having the link relationship may be understood as that two PDCCH candidates having the same PDCCH candidate index in the two SS sets are used to send the same DCI.

In the present invention, in a case where the terminal determines the frequency domain resource for the PDSCH transmission according to the frequency domain resource assignment information, the frequency domain resource indicated by the frequency domain resource assignment information may be mapped to a designated RB included in the designated bandwidth, and the designated RB is determined as the frequency domain resource for the PDSCH transmission. The designated bandwidth includes the RB occupied by the at least one CORESET.

In the present invention, the DCI carried by the at least two PDCCH candidates monitored by the terminal includes the frequency domain resource assignment information, the frequency domain resource assignment information indicates the position of the frequency domain resource within the designated bandwidth, and the designated bandwidth includes the RB occupied by the at least one CORESET, so that the terminal may determine the frequency domain resource for the PDSCH transmission according to the frequency domain resource assignment information. Therefore, with the present method, determination of the frequency domain resource for the PDSCH is made more universal, and the frequency domain resource used for the PDSCH transmission may be determined even in a case where the frequency domain resources of the CORESETs corresponding to the two PDCCH candidates used for the PDCCH repetition are different, thus improving the transmission performance.

Hereinafter, a method for determining the at least one CORESET included in the designated bandwidth corresponding to the frequency domain resource indicated by the frequency domain resource assignment information will be described in embodiments of the present invention.

In an embodiment of the present invention, the at least one CORESET included in the designated bandwidth corresponding to the frequency domain resource indicated by the frequency domain resource assignment information is determined according to at least two CORESETs respectively associated with the at least two SS sets. The at least two SS sets are in the link relationship. The at least two SS sets having the link relationship correspond to the at least two PDCCH candidates monitored by the terminal.

The at least one CORESET included in the designated bandwidth corresponding to the frequency domain resource indicated by the frequency domain resource assignment information is a designated CORESET among the at least two CORESETs respectively associated with the at least two SS sets having the link relationship.

In embodiments of the present invention, the designated CORESET is one of the following.

A: CORESET with a smallest CORESET identifier among the at least two CORESETs respectively associated with the at least two SS sets having the link relationship.
B: CORESET corresponding to a designated SS set, where the designated SS set is an SS set with a smallest SS set identifier among the at least two SS sets having the link relationship.
C: CORESET corresponding to a PRB located at a lowest frequency domain position among designated PRBs, where one designated PRB is a PRB with a lowest PRB number. The PRB with the lowest PRB number is a PRB with the lowest PRB number among the PRBs included in one of the at least two CORESETs respectively associated with the at least two SS sets having the link relationship.

In the present invention, the at least two CORESETs may be CORESET#0 and CORESET#1, where the PRB having the lowest frequency domain position among PRBs occupied by CORESET#0 is PRB#i, and the PRB with the lowest frequency domain position among PRBs occupied by CORESET#1 is PRB#j. In a case where PRB#i is lower than PRB#j in the frequency domain, the designated CORESET is CORESET#0; otherwise, the designated CORESET is CORESET# 1.

D: at least two CORESETs respectively associated with the at least two SS sets having the link relationship.

In the present invention, in response to determining that the designated CORESET is the at least two CORESETs respectively associated with the at least two SS sets having the link relationship, the designated bandwidth corresponding to the frequency domain resource indicated by the frequency domain resource assignment information includes all the PRBs occupied by the at least two CORESETs respectively associated with the at least two SS sets having the link relationship. It may further be understood that the designated bandwidth corresponding to the frequency domain resource indicated by the frequency domain resource assignment information includes a consecutive PRB starting from a first PRB and ending with a second PRB, where the first PRB is a PRB occupying the lowest frequency domain position among the PRBs included in the at least two CORESETs, and the second PRB is a PRB occupying a highest frequency domain position among the PRBs included in the at least two CORESETs.

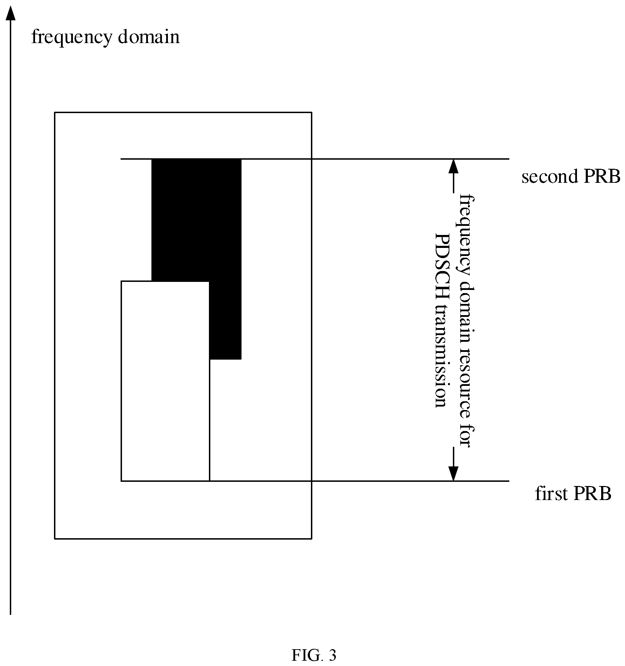

In the present invention, in one aspect, in response to determining that the PRBs occupied by the at least two CORESETs respectively associated with the at least two SS sets having the link relationship are continuous or overlapped, the consecutive PRB starting from the first PRB and ending with the second PRB is the PRBs occupied by the at least two CORESETs respectively associated with the at least two SS sets having the link relationship. FIG. 3 shows a schematic diagram of a PRB occupied by a frequency domain resource in an illustrative embodiment of the present invention. Referring to FIG. 3, the consecutive PRB starting from the first PRB and ending with the second PRB is a bandwidth occupied by the frequency domain resource for the PDSCH transmission.

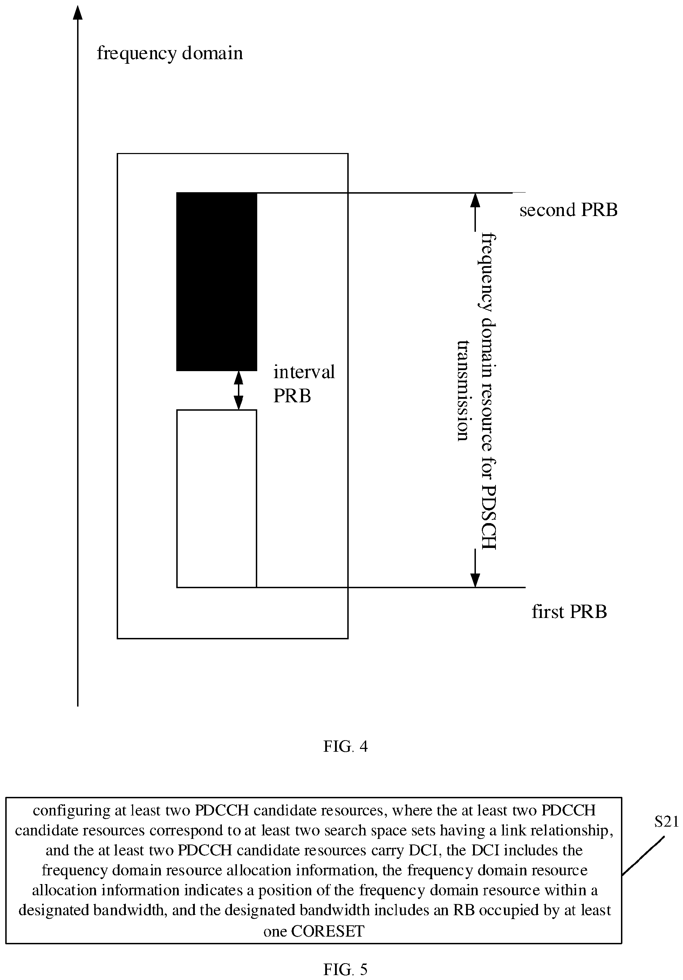

In the present invention, in another aspect, in response to determining that the PRBs occupied by the at least two CORESETs respectively associated with the at least two SS sets having the link relationship are not continuous, the consecutive PRB starting from the first PRB and ending with the second PRB is the PRBs occupied by the at least two CORESETs respectively associated with the at least two SS sets having the link relationship, and an interval PRB located between the PRBs occupied by the at least two CORESETs respectively associated with the at least two SS sets having the link relationship. FIG. 4 shows a schematic diagram of a PRB occupied by a frequency domain resource in an illustrative embodiment of the present invention. Referring to FIG. 4, the consecutive PRB including the interval PRB and starting from the first PRB and ending with the second PRB is the bandwidth occupied by the frequency domain resource for the PDSCH transmission.

In another embodiment of the present invention, the at least one CORESET included in the designated bandwidth corresponding to the frequency domain resource indicated by the frequency domain resource assignment information is CORESETO. In other words, the CORESET included in the designated bandwidth corresponding to the frequency domain resource indicated by the frequency domain resource assignment information is independent of the at least two CORESETs respectively associated with the at least two SS sets having the link relationship.

Furthermore, the method for determining the frequency domain resource provided in the present invention is applicable to a non-interleaved virtual resource block to the physical resource block (VRB-to-PRB) mapping.

Based on the above-mentioned method for determining the frequency domain resource provided in the present invention, in a case where the terminal performs the PDCCH repetition, and the PDCCH carries DCI format 1_0, the frequency domain bandwidth used for the PDSCH transmission may be the frequency domain bandwidth corresponding to CORESET#0, or may be the designated bandwidth determined according to the at least two CORESETs respectively associated with the at least two SS sets. The frequency domain resources of the CORESETs corresponding to the two PDCCH candidates used for the PDCCH repetition may be the same or different.

With the method for determining the frequency domain resource provided in the present invention, in the case where the terminal performs the PDCCH repetition, the bandwidth corresponding to the frequency domain resource indicated by the frequency domain resource assignment information carried in the DCI is determined, and the frequency domain resource for the PDSCH transmission is determined. Therefore, with the present method, the determination of the frequency domain resource for the PDSCH is made more universal, and the frequency domain resource used for the PDSCH transmission may be determined even in a case where the frequency domain resources of the CORESETs corresponding to the two PDCCH candidates used for the PDCCH repetition are different, thus improving the transmission performance.

Based on the same conception, embodiments of the present invention further provides a method for determining a frequency domain resource.

FIG. 5 is a flow chart illustrating a method for determining a frequency domain resource according to an illustrative embodiment. The method for determining the frequency domain resource may be implemented alone or in conjunction with other embodiments of the present invention. As shown in FIG. 5, the method for determining the frequency domain resource is applied to a network device, including the following step.

In S21, the at least two PDCCH candidates are configured, where the at least two PDCCH candidates correspond to at least two SS sets having a link relationship, and the at least two PDCCH candidates carry DCI, the DCI includes frequency domain resource assignment information, the frequency domain resource assignment information indicates a position of the frequency domain resource within a designated bandwidth, and the designated bandwidth includes a resource block occupied by at least one CORESET.

In the present invention, the at least two PDCCH candidates carrying the DCI may be understood as sending the DCI based on the at least two PDCCH candidates. Information included in the DCI sent by the at least two PDCCH candidates is the same, and it may also be understood that the DCI sent by the at least two PDCCH candidates is the same DCI.

In the present invention, a format of the DCI sent by the at least two PDCCH candidates may be DCI format 1_0.

In the present invention, the indexes of the at least two PDCCH candidates configured by the network device are the same.

A typical value of the number of the at least two PDCCH candidates configured by the network device in the present invention is two.

In one example, in the Multi-TRP PDCCH repetition, the two PDCCH candidates configured by the network device correspond to the two SS sets having the link relationship, and the two PDCCH candidates have the same index and are used to send the same DCI. The DCI includes the frequency domain resource assignment information, where the frequency domain resource assignment information indicates the position of the frequency domain resource within the designated bandwidth, and the designated bandwidth includes RB(s) occupied by the at least one CORESET.

The two SS sets with the link relationship may be understood as that two PDCCH candidates having the same PDCCH candidate index in the two SS sets are used to send the same DCI.

In the present invention, the DCI carried by the at least two PDCCH candidates configured by the network device includes the frequency domain resource assignment information, the frequency domain resource assignment information indicates the position of the frequency domain resource within the designated bandwidth, and the designated bandwidth includes the RB occupied by the at least one CORESET, so that the terminal may determine the frequency domain resource for the PDSCH transmission according to the frequency domain resource assignment information. Therefore, with the present method, the determination of the frequency domain resource for the PDSCH is made more universal. In the case where the frequency domain resources of the CORESETs corresponding to the two PDCCH candidates used for the PDCCH repetition are different, the frequency domain resource used for the PDSCH transmission may be clearly defined, so that the terminal and the network device have a consistent understanding of the determined frequency domain resource for the PDSCH, thereby improving the transmission performance.

Hereinafter, a method for determining the at least one CORESET included in the designated bandwidth corresponding to the frequency domain resource indicated by the frequency domain resource assignment information will be described in embodiments of the present invention.

In an embodiment of the present invention, the at least one CORESET included in the designated bandwidth corresponding to the frequency domain resource indicated by the frequency domain resource assignment information is determined according to at least two CORESETs respectively associated with the at least two SS sets. The at least two SS sets are in the link relationship. The at least two SS sets having the link relationship correspond to the at least two PDCCH candidates configured by the network device.

The at least one CORESET included in the designated bandwidth corresponding to the frequency domain resource indicated by the frequency domain resource assignment information is a designated CORESET among the at least two CORESETs respectively associated with the at least two SS sets having the link relationship.

In embodiments of the present invention, the designated CORESET is one of the following.

A: CORESET with a smallest CORESET identifier among the at least two CORESETs respectively associated with the at least two SS sets having the link relationship.
B: CORESET corresponding to a designated SS set, where the designated SS set is an SS set with a smallest SS set identifier among the at least two SS sets having the link relationship.
C: CORESET corresponding to a PRB located at a lowest frequency domain position among designated PRBs, where one designated PRB is a PRB with a lowest PRB number. The PRB with the lowest PRB number is a PRB with the lowest PRB number among the PRBs included in one of the at least two CORESETs respectively associated with the at least two SS sets having the link relationship.

In the present invention, the at least two CORESETs may be CORESET#0 and CORESET#1, where the PRB having the lowest frequency domain position among PRBs occupied by CORESET#0 is PRB#i, and the PRB with the lowest frequency domain position among PRBs occupied by CORESET#1 is PRB#j. In a case where PRB#i is lower than PRB#j in the frequency domain, the designated CORESET is CORESET#0; otherwise, the designated CORESET is CORESET# 1.

D: at least two CORESETs respectively associated with the at least two SS sets having the link relationship.

In the present invention, in response to determining that the designated CORESET is the at least two CORESETs respectively associated with the at least two SS sets having the link relationship, the designated bandwidth corresponding to the frequency domain resource indicated by the frequency domain resource assignment information includes all the PRBs occupied by the at least two CORESETs respectively associated with the at least two SS sets having the link relationship. It may further be understood that the designated bandwidth corresponding to the frequency domain resource indicated by the frequency domain resource assignment information includes a consecutive PRB starting from a first PRB and ending with a second PRB, where the first PRB is a PRB occupying the lowest frequency domain position among the PRBs included in the at least two CORESETs, and the second PRB is a PRB occupying a highest frequency domain position among the PRBs included in the at least two CORESETs.

In the present invention, in one aspect, in response to determining that the PRBs occupied by the at least two CORESETs respectively associated with the at least two SS sets having the link relationship are continuous or overlapped, the consecutive PRB starting from the first PRB and ending with the second PRB is the PRBs occupied by the at least two CORESETs respectively associated with the at least two SS sets having the link relationship. In the present invention, in another aspect, in response to determining that the PRBs occupied by the at least two CORESETs respectively associated with the at least two SS sets having the link relationship are not continuous, the consecutive PRB starting from the first PRB and ending with the second PRB is the PRBs occupied by the at least two CORESETs respectively associated with the at least two SS sets having the link relationship, and an interval PRB located between the PRBs occupied by the at least two CORESETs respectively associated with the at least two SS sets having the link relationship.

In another embodiment of the present invention, the at least one CORESET included in the designated bandwidth corresponding to the frequency domain resource indicated by the frequency domain resource assignment information is CORESET0. In other words, the CORESET included in the designated bandwidth corresponding to the frequency domain resource indicated by the frequency domain resource assignment information is independent of the at least two CORESETs respectively associated with the at least two SS sets having the link relationship.

Furthermore, the method for determining the frequency domain resource provided in the present invention is applicable to a non-interleaved virtual resource block to the physical resource block (VRB-to-PRB) mapping.

Based on the above-mentioned method for determining the frequency domain resource provided in the present invention, in a PDCCH repetition scenario, the PDCCH carries DCI format 1_0, and the frequency domain bandwidth used for the PDSCH transmission may be the frequency domain bandwidth corresponding to CORESET#0, or may be the designated bandwidth determined according to the at least two CORESETs respectively associated with the at least two SS sets. The frequency domain resources of the CORESETs corresponding to the two PDCCH candidates used for the PDCCH repetition may be the same or different.

With the method for determining the frequency domain resource provided in the present invention, in the PDCCH repetition scenario, the bandwidth corresponding to the frequency domain resource indicated by the frequency domain resource assignment information carried in the DCI is determined, and the frequency domain resource for the PDSCH transmission is determined. Therefore, with the present method, the determination of the frequency domain resource for the PDSCH is made more universal, and the frequency domain resource used for the PDSCH transmission may be determined even in a case where the frequency domain resources of the CORESETs corresponding to the two PDCCH candidates used for the PDCCH repetition are different, thus improving the transmission performance.

It may be understood that the method for determining the frequency domain resource applied to the network device in embodiments of the present invention is similar to the method for determining the frequency domain resource applied to the terminal. Therefore, where description of the method for determining the frequency domain resource applied to the network device is not sufficiently detailed, reference may be made to the relevant contents of the method for determining the frequency domain resource applied to the terminal, which will not be described in detail herein.

It is further understood that the method for determining the frequency domain resource provided by embodiments of the present invention is applicable to a process in which the terminal interacts with the network device to implement the determination of the frequency domain resource. In the process in which the terminal interacts with the network device to implement the determination of the frequency domain resource, the terminal and the network device have the relevant functions in the above-mentioned embodiments.

It should be noted that those skilled in the art will appreciate that the various implementation methods/embodiments involved in the embodiments of the present invention may be used in conjunction with the aforementioned embodiments or may be used independently. The principles of implementation are similar whether used independently or in conjunction with the foregoing embodiments. In the implementation of the present invention, some embodiments are described by using the implementations together. Those skilled in the art will appreciate that such examples are not limitations for the embodiments of the present invention.

Based on the same conception, embodiments of the present invention further provides an apparatus for determining the frequency domain resource.

It may be understood that, in order to implement the above-mentioned functions, the apparatus for determining the frequency domain resource provided by the embodiments of the present invention includes hardware structures and/or software modules for performing various functions correspondingly. The embodiments of the present invention may be implemented in a form of hardware or a combination of hardware and computer software, in combination with units and algorithm steps of each example disclosed in the embodiments of the present invention. Whether a function is performed by the hardware or by the computer software to drive the hardware depends on a specific application and design constraints of the technical solution. For specific applications, those skilled in the art may use different methods to implement the described function, but such an implementation should not be regarded as extending beyond the scope of the technical solutions of the embodiments of the present invention.

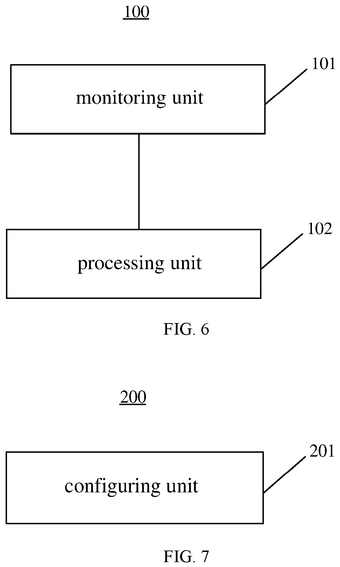

FIG. 6 is a block diagram illustrating an apparatus for determining a frequency domain resource according to an illustrative embodiment. Referring to FIG. 6, the apparatus 100 for determining the frequency domain resource includes a monitoring unit 101 and a processing unit 102. The apparatus 100 for determining the frequency domain resource may be provided as the terminal involved in the above-described embodiments.

The monitoring unit 101 is configured to monitor the at least two PDCCH candidates, where the at least two PDCCH candidates correspond to the at least two SS sets having the link relationship, and the at least two PDCCH candidates carry the DCI, the DCI includes the frequency domain resource assignment information, the frequency domain resource assignment information indicates the position of the frequency domain resource within the designated bandwidth, and the designated bandwidth includes the RB occupied by the at least one CORESET. The processing unit 102 is configured to determine the frequency domain resource for the PDSCH transmission according to the frequency domain resource assignment information.

In an embodiment, the at least one CORESET is determined according to at least two CORESETs respectively associated with the at least two SS sets.

In an embodiment, the at least one CORESET is the designated CORESET among the at least two CORESETs.

In an embodiment, the designated CORESET is one of: the CORESET with the smallest CORESET identifier among the at least two CORESETs; the CORESET corresponding to the designated SS set, where the designated SS set is the SS set with the smallest SS set identifier among the at least two SS sets; the CORESET corresponding to the PRB occupying the lowest frequency domain position among the designated PRBs, where one designated PRB is the PRB with the lowest number among the PRBs included in one of the at least two CORESETs; or the at least two CORESETs.

In an embodiment, in response to the designated CORESET being the at least two CORESETs, the designated bandwidth includes: the consecutive PRB starting from the first PRB and ending with the second PRB, where the first PRB is the PRB occupying the lowest frequency domain position among the PRBs included in the at least two CORESETs, and the second PRB is the PRB occupying the highest frequency domain position among the PRBs included in the at least two CORESETs.

In an embodiment, the at least one CORESET is CORESET0.

In an embodiment, the format of the DCI is DCI 1_0.

FIG. 7 is a block diagram illustrating an apparatus for determining a frequency domain resource according to an illustrative embodiment. Referring to FIG. 7, the apparatus 200 for determining the frequency domain resource includes a configuring unit 201. The apparatus 200 for determining the frequency domain resource may be provided as the network device involved in the above-described embodiments.

The configuring unit 201 is configured to configure the at least two PDCCH candidates, where the at least two PDCCH candidates correspond to the at least two SS sets having the link relationship, and the at least two PDCCH candidates carry the DCI, the DCI includes the frequency domain resource assignment information, the frequency domain resource assignment information indicates the position of the frequency domain resource within the designated bandwidth, and the designated bandwidth includes the RB occupied by the at least one CORESET.

In an embodiment, the at least one CORESET is determined according to at least two CORESETs respectively associated with the at least two SS sets.

In an embodiment, the at least one CORESET is the designated CORESET among the at least two CORESETs.

In an embodiment, the designated CORESET is one of: the CORESET with the smallest CORESET identifier among the at least two CORESETs; the CORESET corresponding to the designated SS set, where the designated SS set is the SS set with the smallest SS set identifier among the at least two SS sets; the CORESET corresponding to the PRB occupying the lowest frequency domain position among the designated PRBs, where one designated PRB is the PRB with the lowest number among the PRBs included in one of the at least two CORESETs; or the at least two CORESETs.

In an embodiment, in response to the designated CORESET being the at least two CORESETs, the designated bandwidth includes: the consecutive PRB starting from the first PRB and ending with the second PRB, where the first PRB is the PRB occupying the lowest frequency domain position among the PRBs included in the at least two CORESETs, and the second PRB is the PRB occupying the highest frequency domain position among the PRBs included in the at least two CORESETs.

In an embodiment, the at least one CORESET is CORESET0.

In an embodiment, the format of the DCI is DCI 1_0.

With respect to the apparatuses in the above embodiments, the specific manners for performing operations for individual modules therein have been described in detail in the embodiments regarding the method, which will not be elaborated herein.

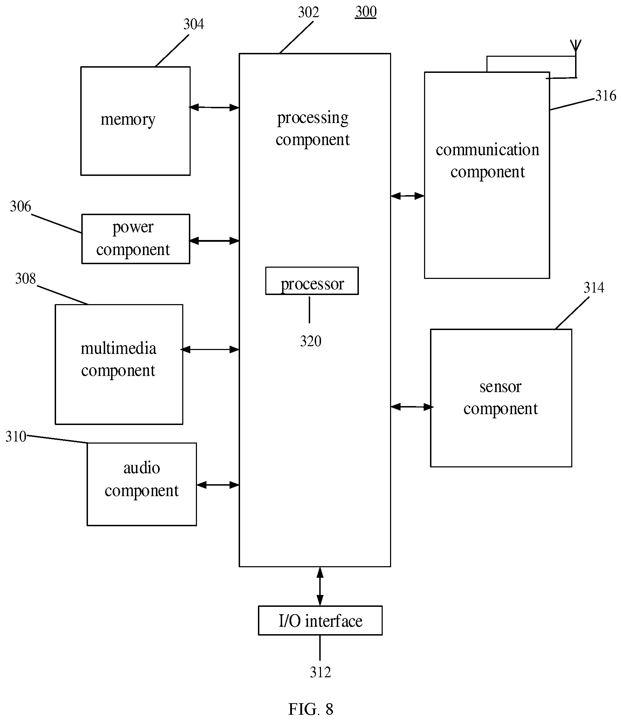

FIG. 8 is a block diagram illustrating a device for determining a frequency domain resource according to an illustrative embodiment. For example, the device 300 can be a mobile phone, a computer, a digital broadcast terminal, a messaging device, a game console, a tablet device, a medical device, a fitness device, a personal digital assistant, or the like.

Referring to FIG. 8, the device 300 may include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the device 300, such as the operations associated with display, telephone calls, data communications, camera operations, and recording operations. The processing component 302 may include one or more processors 320 to execute instructions to perform all or part of the steps in the above described methods. Moreover, the processing component 302 may include one or more modules which facilitate the interaction between the processing component 302 and other components. For instance, the processing component 302 may include a multimedia module to facilitate the interaction between the multimedia component 308 and the processing component 302.

The memory 304 is configured to store various types of data to support the operation of the device 300. Examples of such data include instructions for any applications or methods operated on the device 300, contact data, phonebook data, messages, pictures, video, etc. The memory 304 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 306 provides power to various components of the device 300. The power component 306 may include a power management system, one or more power sources, and any other components associated with generation, management, and distribution of power in the device 300.

The multimedia component 308 includes a screen providing an output interface between the device 300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 308 includes a front camera and/or a rear camera. The front camera and/or the rear camera may receive an external multimedia datum while the device 300 is in an operation mode, such as a photographing mode or a video mode. Each of the front camera and the rear camera may be a fixed optical lens system or have focus and optical zoom capability.

The audio component 310 is configured to output and/or input audio signals. For example, the audio component 310 includes a microphone ("MIC") configured to receive an external audio signal when the device 300 is in an operation mode, such as a call mode, a recording mode, and a voice recognition mode. The received audio signal may be further stored in the memory 304 or transmitted via the communication component 316. In some embodiments, the audio component 310 further includes a speaker to output audio signals.

The I/O interface 312 provides an interface between the processing component 302 and peripheral interface modules, such as a keyboard, a click wheel, a button and the like. The button may include, but not limited to, a home button, a volume button, a starting button, and a locking button.

The sensor component 314 includes one or more sensors to provide status assessments of various aspects of the device 300. For instance, the sensor component 314 may detect an open/closed status of the device 300, relative positioning of components, e.g., the display and the keypad, of the device 300, a change in position of the device 300 or a component of the device 300, a presence or absence of user contact with the device 300, an orientation or an acceleration/deceleration of the device 300, and a change in temperature of the device 300. The sensor component 314 may include a proximity sensor configured to detect the presence of nearby objects without any physical contact. The sensor component 314 may also include a light sensor, such as a CMOS or CCD image sensor, for use in imaging applications. In some embodiments, the sensor component 314 may further include an accelerometer sensor, a gyroscope sensor, a magnetic sensor, a pressure sensor, or a temperature sensor.

The communication component 316 is configured to facilitate communication, wired or wirelessly, between the device 300 and other devices. The device 300 can access a wireless network based on a communication standard, such as Wi-Fi, 2G, or 3G, or a combination thereof. In an embodiment, the communication component 316 receives a broadcast signal or broadcast associated information from an external broadcast management system via a broadcast channel. In an embodiment, the communication component 316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In embodiments, the device 300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In embodiments, there is further provided a non-transitory computer-readable storage medium (such as the memory 304) including instructions that, when executed by the processor 320 of the device 300, to perform any of the above-described methods. For example, the non-transitory computer-readable storage medium may be a ROM, a RAM, a CD-ROM, a magnetic tape, a floppy disc, an optical data storage device, and the like.

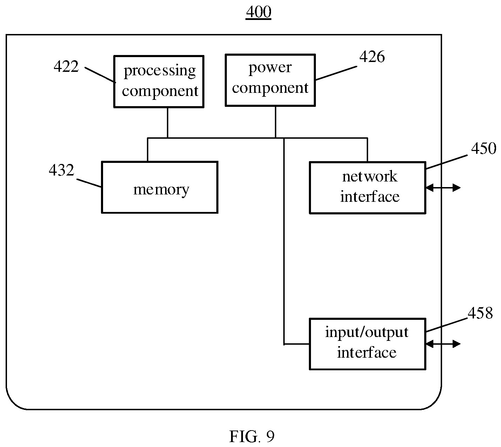

FIG. 9 is a block diagram illustrating a device for determining a frequency domain resource according to an illustrative embodiment. For example, a device 400 may be a network device. Referring to FIG. 9, the device 400 includes a processing component 422 and a memory resource represented by a memory 432. The processing component 422 may further include one or more processors. The memory resource is configured to store instructions executable by the processing component 422, such as an application program. The application program stored in the memory 432 may include one or more modules corresponding to a set of instructions. In addition, the processing component 422 is configured to execute the instructions to perform the above method.

The device 400 further includes a power component 426 configured to operate a power management of the device 400, a wired or wireless network interface 450 configured to connect the device 400 to the network, and an input/output (I/O) interface 458. The device 400 may operate an operating system stored in the memory 432, such as Windows Server TM, Mac OS XTM, Unix TM, Linux TM, Free BSDTM, or the like.

In embodiments, there is further provided a non-transitory computer-readable storage medium (such as the memory 432) including instructions that, when executed by the processor 422 of the device 400, to perform any of the above-described methods. For example, the non-transitory computer-readable storage medium may be a ROM, a RAM, a CD-ROM, a magnetic tape, a floppy disc, an optical data storage device, and the like.

It is further understood that "a plurality of" in this disclosure refers to two or more, and other quantifiers are similar thereto. Term "and/or", which describes an associated relationship of associated objects, refers to three relationships. For example, A and/or B means that A exists alone, A and B exist at the same time, and B exists alone. A character "/" generally indicates that contextual objects are in an "or" relationship. Terms "a/an" and "the" in the singular form are intended to include plural forms, unless clearly indicated in the context otherwise.

It is further understood that terms such as "first", and "second" are used to describe various information, these information should not be limited by these terms. These terms are only used for distinguishing information of the same type from each other and do not denote a particular order or degree of importance. As a matter of fact, the terms such as "first", and "second" may be used interchangeably. For example, without departing from the scope of embodiments of the present invention, first information may also be referred to as second information, and similarly, the second information may also be referred to as the first information.

It is further understood that although operations are described in a specific order in the accompanying drawings in the embodiments of the present invention, it should not be understood that these operations are required to be performed in the specific order shown or in a serial order, or that all of the operations shown are required to be performed to obtain desired results. In some circumstances, multitasking and parallel processing may be advantageous.

Other embodiments of the present invention will be apparent to those skilled in the art from consideration of the specification and practice of the present invention disclosed here. The present invention is intended to cover any variations, uses, or adaptations of the present invention following the general principles thereof and including common knowledge or conventional technical means known in the art but not disclosed in the present invention. The specification and examples should be considered as exemplary only, with a true scope and spirit of the present invention being indicated by the following claims.

It will be appreciated that the present invention is not limited to the exact construction that has been described above and illustrated in the accompanying drawings, and that various modifications and changes can be made without departing from the scope thereof. The scope of the present invention is only limited by the appended claims.

**Claims**

1. A method for determining a frequency domain resource, applied to a terminal, comprising:

    monitoring at least two physical downlink control channel (PDCCH) candidate resources, wherein the at least two PDCCH candidate resources correspond to at least two search space sets having a link relationship, and the at least two PDCCH candidate resources carry downlink control information (DCI), the DCI comprises frequency domain resource assignment information, the frequency domain resource assignment information indicates a position of the frequency domain resource within a designated bandwidth, and the designated bandwidth comprises a resource block occupied by at least one control resource set; and
    determining a frequency domain resource for a physical downlink shared channel (PDSCH) transmission according to the frequency domain resource assignment information.

2. The method of claim 1, wherein the at least one control resource set is determined according to at least two control resource sets respectively associated with the at least two search space sets.

3. The method of claim 2, wherein the at least one control resource set is a designated control resource set among the at least two control resource sets.

4. The method of claim 3, wherein the designated control resource set is one of:

    a control resource set with a smallest control resource set identifier among the at least two control resource sets;
    a control resource set corresponding to a designated search space set, wherein the designated search space set is a search space set with a smallest search space set identifier among the at least two search space sets;
    a control resource set corresponding to a physical resource block occupying a lowest frequency domain position among designated physical resource blocks, wherein one designated physical resource block is a physical resource block with a lowest number among physical resource blocks comprised in one of the at least two control resource sets; or
the at least two control resource sets.

5. The method of claim 4, wherein in response to the designated control resource set being the at least two control resource sets, the designated bandwidth comprises:
a consecutive physical resource block starting from a first physical resource block and ending with a second physical resource block, wherein the first physical resource block is a physical resource block occupying a lowest frequency domain position among physical resource blocks comprised in the at least two control resource sets, and the second physical resource block is a physical resource block occupying a highest frequency domain position among the physical resource blocks comprised in the at least two control resource sets.

6. The method of claim 1, wherein the at least one control resource set is control resource set 0.

7. The method of any one of claims 1 to 6, wherein a format of the DCI is DCI 1_0.

8. A method for determining a frequency domain resource, applied to a network device, comprising:
configuring at least two physical downlink control channel (PDCCH) candidate resources, wherein the at least two PDCCH candidate resources correspond to at least two search space sets having a link relationship, and the at least two PDCCH candidate resources carry downlink control information (DCI), the DCI comprises frequency domain resource assignment information, the frequency domain resource assignment information indicates a position of the frequency domain resource within a designated bandwidth, and the designated bandwidth comprises a resource block occupied by at least one control resource set.

9. The method of claim 8, wherein the at least one control resource set is determined according to at least two control resource sets respectively associated with the at least two search space sets.

10. The method of claim 9, wherein the at least one control resource set is a designated control resource set among the at least two control resource sets.

11. The method of claim 10, wherein the designated control resource set is one of:

    a control resource set with a smallest control resource set identifier among the at least two control resource sets;
    a control resource set corresponding to a designated search space set, wherein the designated search space set is a search space set with a smallest search space set identifier among the at least two search space sets;

a control resource set corresponding to a physical resource block occupying a lowest frequency domain position among designated physical resource blocks, wherein one designated physical resource block is a physical resource block with a lowest number among physical resource blocks comprised in one of the at least two control resource sets; or

the at least two control resource sets.

12. The method of claim 11, wherein in response to the designated control resource set being the at least two control resource sets, the designated bandwidth comprises:

a consecutive physical resource block starting from a first physical resource block and ending with a second physical resource block, wherein the first physical resource block is a physical resource block occupying a lowest frequency domain position among physical resource blocks comprised in the at least two control resource sets, and the second physical resource block is a physical resource block occupying a highest frequency domain position among the physical resource blocks comprised in the at least two control resource sets.

13. The method of claim 8, wherein the at least one control resource set is control resource set 0.

14. The method of any one of claims 8 to 13, wherein a format of the DCI is DCI 1_0.

15. An apparatus for determining a frequency domain resource, comprising:

a monitoring unit configured to monitor at least two physical downlink control channel (PDCCH) candidate resources, wherein the at least two PDCCH candidate resources correspond to at least two search space sets having a link relationship, and the at least two PDCCH candidate resources carry downlink control information (DCI), the DCI comprises frequency domain resource assignment information, the frequency domain resource assignment information indicates a position of the frequency domain resource within a designated bandwidth, and the designated bandwidth comprises a resource block occupied by at least one control resource set; and

a processing unit configured to determine a frequency domain resource for a physical downlink shared channel (PDSCH) transmission according to the frequency domain resource assignment information.

16. An apparatus for determining a frequency domain resource, comprising:

a configuring unit configured to configure at least two physical downlink control channel (PDCCH) candidate resources, wherein the at least two PDCCH candidate resources correspond to at least two search space sets having a link relationship, and the at least two PDCCH candidate resources carry downlink control information (DCI), the DCI comprises frequency domain resource assignment information, the frequency domain resource assignment information indicates a position of the frequency domain resource within a designated bandwidth, and the designated bandwidth comprises a resource block occupied by at least one control resource set.

17. A device for determining a frequency domain resource, comprising:

a processor; and
a memory for storing instructions executable by the processor;
wherein the processor is configured to perform the method of any one of claims 1 to 7.

18. A device for determining a frequency domain resource, comprising:

a processor; and
a memory for storing instructions executable by the processor;
wherein the processor is configured to perform the method of any one of claims 8 to 14.

19. A storage medium having instructions that, when executed by a processor of a terminal, enable the terminal to perform the method of any one of claims 1 to 7.

20. A storage medium having instructions that, when executed by a processor of a network device, enable the network device to perform the method of any one of claims 8 to 14.

FIG. 1

| monitoring at least two PDCCH candidate resources, where the at least two PDCCH candidate resources correspond to at least two search space sets having a link relationship, and the at least two PDCCH candidate resources carry downlink control information (DCI), the DCI includes frequency domain resource assignment information, the frequency domain resource assignment information indicates a position of the frequency domain resource within a designated bandwidth, and the designated bandwidth includes a resource block occupied by at least one control resource set | S11 |

| determining a frequency domain resource for a PDSCH transmission according to the frequency domain resource assignment information | S12 |

FIG. 2

frequency domain

second PRB

frequency domain resource for PDSCH transmission

first PRB

FIG. 3

frequency domain

second PRB

frequency domain resource for PDSCH transmission

interval PRB

first PRB

FIG. 4

configuring at least two PDCCH candidate resources, where the at least two PDCCH candidate resources correspond to at least two search space sets having a link relationship, and the at least two PDCCH candidate resources carry DCI, the DCI includes the frequency domain resource allocation information, the frequency domain resource allocation information indicates a position of the frequency domain resource within a designated bandwidth, and the designated bandwidth includes an RB occupied by at least one CORESET

S21

FIG. 5

<u>100</u>

```
┌─────────────────────────────┐
│                             │  ╱ 101
│       monitoring unit       │
│                             │
└─────────────────────────────┘
              │
              │
              │
┌─────────────────────────────┐
│                             │  ╱ 102
│       processing unit       │
│                             │
└─────────────────────────────┘
```

FIG. 6

<u>200</u>

```
┌─────────────────────────────┐
│                             │  ╱ 201
│       configuring unit      │
│                             │
└─────────────────────────────┘
```

FIG. 7

304

302      300

memory

processing
component

communication
component

316

306

power
component

processor

308

multimedia
component

320

314

sensor
component

310

audio
component

I/O interface

312

FIG. 8

400

422 — processing component    power component — 426

432 — memory    network interface — 450

input/output interface — 458

FIG. 9

## INTERNATIONAL SEARCH REPORT

| | International application No. |
|---|---|
| | **PCT/CN2021/142694** |

| **A.** | **CLASSIFICATION OF SUBJECT MATTER** |
|---|---|
| | H04L 1/00(2006.01)i |

According to International Patent Classification (IPC) or to both national classification and IPC

| **B.** | **FIELDS SEARCHED** |
|---|---|

Minimum documentation searched (classification system followed by classification symbols)

　　H04L

Documentation searched other than minimum documentation to the extent that such documents are included in the fields searched

Electronic data base consulted during the international search (name of data base and, where practicable, search terms used)

　　CNTXT; CNKI; WPABS; ENTXT; 3GPP: 两个, 多个, 控制资源集, 传输接收点, 物理下行控制信道, 候选, 搜索空间集, 相同, 下行控制信息, 频域, 分配, 重复, two, multi, Control Resource Set, CORESET, Transmission Reception Point, TRP, PDCCH, candidate, same, Downlink Control Information, DCI, frequency, distribute, repetition

| **C.** | **DOCUMENTS CONSIDERED TO BE RELEVANT** | | |
|---|---|---|---|
| Category* | Citation of document, with indication, where appropriate, of the relevant passages | | Relevant to claim No. |
| X | CN 111615802 A (LENOVO PRIVATE LTD., SINGAPORE) 01 September 2020 (2020-09-01) <br> claim 1, and description, paragraphs [0031]-[0056] | | 1-20 |
| X | US 2021112560 A1 (QUALCOMM INC.) 15 April 2021 (2021-04-15) <br> description, paragraph [0135] | | 1-20 |
| A | CN 112567672 A (LENOVO PRIVATE LTD., SINGAPORE) 26 March 2021 (2021-03-26) <br> entire document | | 1-20 |
| A | CN 112335199 A (QUALCOMM INC.) 05 February 2021 (2021-02-05) <br> entire document | | 1-20 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 May 2022** | **25 May 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

# EP 4 459 904 A1

**INTERNATIONAL SEARCH REPORT**
Information on patent family members

International application No.

**PCT/CN2021/142694**

| Patent document cited in search report | | | Publication date (day/month/year) | Patent family member(s) | | | Publication date (day/month/year) |
|---|---|---|---|---|---|---|---|
| CN | 111615802 | A | 01 September 2020 | WO | 2019142051 | A1 | 25 July 2019 |
| | | | | US | 2019222400 | A1 | 18 July 2019 |
| | | | | EP | 3741064 | A1 | 25 November 2020 |
| | | | | US | 2020280390 | A1 | 03 September 2020 |
| | | | | KR | 20200107972 | A | 16 September 2020 |
| US | 2021112560 | A1 | 15 April 2021 | TW | 202131732 | A | 16 August 2021 |
| | | | | WO | 2021071725 | A1 | 15 April 2021 |
| CN | 112567672 | A | 26 March 2021 | CN | 112602283 | A | 02 April 2021 |
| CN | 112335199 | A | 05 February 2021 | | None | | |

Form PCT/ISA/210 (patent family annex) (January 2015)